# EUROPÄISCHE PATENTSCHRIFT

(11) **EP 0 541 564 B1**
(45) Veröffentlichungstag und Bekanntmachung des Hinweises auf die Patenterteilung: **07.09.1994**
(21) Anmeldenummer: 91911213.6
(22) Anmeldetag: 26.06.1991
(51) Int. Cl.: B60S 1/34

(54) **WISCHVORRICHTUNG FÜR SCHEIBEN VON KRAFTFAHRZEUGEN**
DEVICE FOR WIPING MOTOR VEHICLE WINDSCREENS
ESSUIE-GLACE DE VEHICULES A MOTEUR

(30) Priorität: 03.08.1990 DE 4024702; 16.10.1990 DE 4032762
(43) Veröffentlichungstag der Anmeldung: 19.05.1993
(73) Patentinhaber: ROBERT BOSCH GMBH, 70442 Stuttgart (DE)
(72) Erfinder: ZIMMER, Joachim, D-7591 Sasbach (DE); POHLERS, Ralf, D-7560 Gaggenau (DE); GEIS, Andreas, D-7580 Bühl (DE); DIETRICH, Jan, D-7580 Bühl-Vimbuch (DE)
(86) Internationale Anmeldenummer: DE9100520
(87) Internationale Veröffentlichungsnummer: WO9202391

(56) Entgegenhaltungen:
- EP-A- 0 382 346
- AT-B- 252 748
- BE-A- 901 051
- DE-A- 1 555 256
- DE-A- 2 314 724
- DE-A- 3 314 456
- PATENT ABSTRACTS OF JAPAN, Band 12, Nr. 57 (M-670)(2904), 20. Februar 1988 & JP-A-62205843 (NIPPON DENSO CO. LTD.) 10. September 1987
- PATENT ABSTRACTS OF JAPAN, Band 10, Nr. 242 (M-509)(2298), 21. August 1986 & JP-A-6171254 (NIPPON DENSO CO. LTD.) 12. April 1986
- PATENT ABSTRACTS OF JAPAN, Band 13, Nr. 473 (M-884)(3821) 26. Oktober 1989 & JP-A-1186499 (NIPPON SOKEN INC.) 25. Juli 1989

## Beschreibung

### Stand der Technik

Die Erfindung geht aus von einer Wischvorrichtung nach der Gattung des Hauptanspruchs. Es ist schon eine Wischvorrichtung bekannt (DE-A-33 14 456), bei der der Stößel über ein Zahngetriebe in Abhängigkeit von bestimmten Kriterien so verschoben wird, daß die Spannung der Zugfeder entsprechend verringert oder erhöht wird. Zur Betätigung des Zahngetriebes ist ein elektrischer Antriebsmotor erforderlich, der über eine die Kriterien erfassenden Sensoren aufweisende Steuereinheit in seiner Drehrichtung beeinflußt wird.

### Vorteile der Erfindung

Die erfindungsgemäße Wischvorrichtung mit den kennzeichnenden Merkmalen des Hauptanspruchs hat demgegenüber den Vorteil, daß durch die Anordnung der Nockenbahn auf einfache Weise eine exakte Anpassung der Anpreßkraft an die unterschiedlichen Forderungen durch eine entsprechende Auslegung der Nockenhöhe und/oder der Nockenlänge erreichbar ist.

Als weiterer Vorteil ist anzusehen, daß auch in der Ablagestellung der Wischblatt-Auflagedruck reduziert ist, so daß gleichzeitig die unerwünschte bleibende Verformung des Wischgummis vermieden wird.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

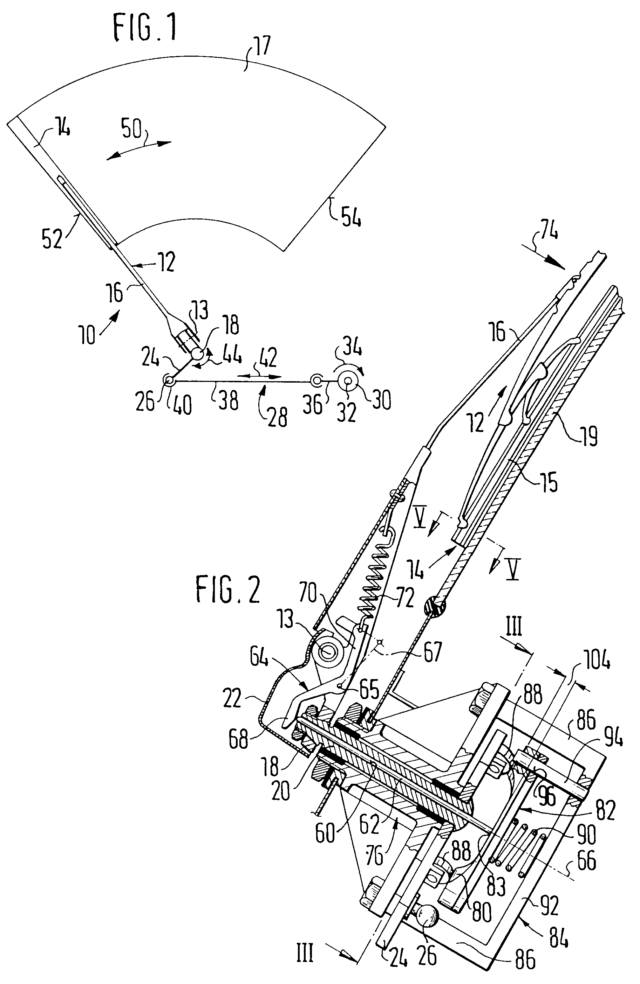

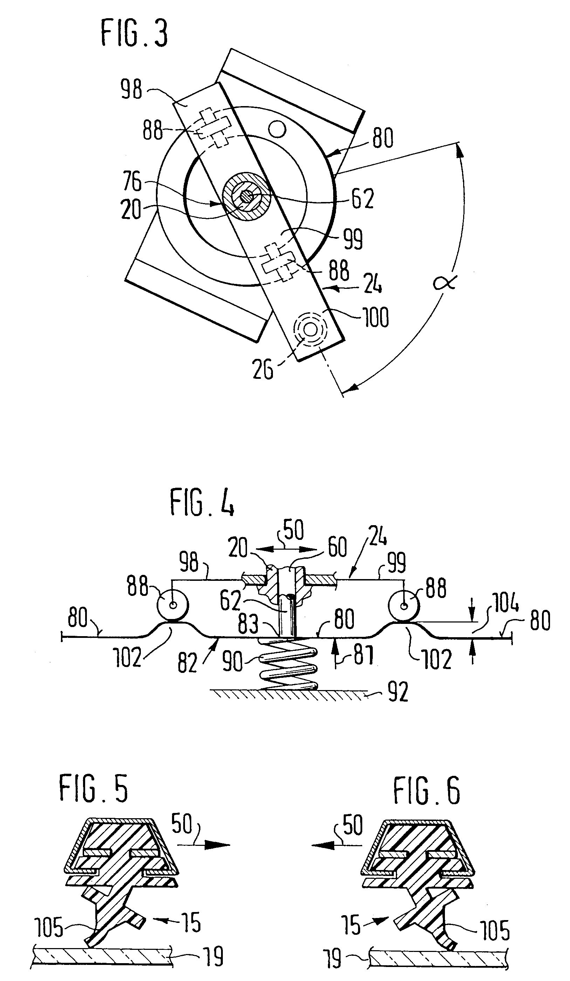

Ein Ausführungsbeispiel der Erfindung ist in der Zeichnung dargestellt und in der nachfolgenden Beschreibung näher erläutert. Es zeigen Figur 1 eine schematische Darstellung einer Wischvorrichtung für die Windschutzscheibe eines Kraftfahrzeuges, Figur 2 eine vergrößerte Teilschnitt-Darstellung der Wischvorrichtung gemäß Figur 1, Figur 3 einen Schnitt durch die Wischvorrichtung gemäß Figur 2 entlang der Linie III-III, Figur 4 eine schematisch dargestellte Abwicklung einer zur Wischvorrichtung gehörenden Nockenbahn, mit dieser Nockenbahn zugeordneten Abgreifrollen, Figur 5 die sich ergebende Querschnittsfläche eines Schnitts entlang der Linie V-V in Figur 2, in vergrößerter Darstellung, wobei das Wischelement sich in einer ersten Betriebslage befindet, und Figur 6 die Schnittfläche gemäß Figur 5 mit dem in seiner anderen Betriebslage befindlichen Wischelement.

### Beschreibung des Ausführungsbeispiels

Figur 1 zeigt eine Wischvorrichtung 10, die einen pendelnd angetriebenen Wischhebel 12 hat. Zu dem Wischhebel 12 gehören ein auf der zu wischenden Scheibe aufliegendes, langgestrecktes Wischblatt 14, das an dem freien Ende eines Wischerarmes 16 angelenkt ist. Der Wischerarm 16 ist mit einem Nabenteil 18 gelenkig verbunden, das seinerseits auf einer in ihrer Längsachse pendelnd angetriebene Wischerwelle 20 befestigt ist. Eine zum Wischhebel 12 gehörende Abdeckkappe 22 deckt das Nabenteil 18 weitgehend ab. Wie Figur 2 zeigt, ist der Wischhebel 12 mit dem einen Ende der Wischerwelle 20 verbunden. An dem anderen Ende der Wischerwelle 20 ist eine Schwinge 24 drehfest angeordnet. Weiter trägt die Schwinge 24 einen Kugelzapfen 26, der zum Anschließen des Pendelgetriebes 28 (Figur 1) dient. Das Pendelgetriebe weist ein Antriebsaggregat 30 auf, an dessen Abtriebswelle 32 eine in Richtung des Pfeiles 34 umlaufende Kurbel 36 befestigt ist. An dem freien Ende der Kurbel 36 ist das eine Ende eine Schubstange 38 angelenkt und das andere Ende der Schubstange 38 greift mit einer Gelenkpfanne 40 an dem Kugelzapfen 26 der Schwinge 24 an (Figur 1). Wenn das Antriebsaggregat die Kurbel 36 in Richtung des Pfeiles 34 umlaufend antreibt, wird die Schubstange 38 in Richtung des Doppelpfeiles 42 hin- und herbewegt. Daraus resultiert eine Pendelbewegung (Doppelpfeil 44), die von der Schwinge 24 auf die Wischerwelle 20 und von dieser auf den Wischhebel 12 übertragen wird. Es ergibt sich somit ein Pendelwinkel α (Figur 3), der sowohl für die Schwinge 24 als auch für den Wischhebel 12 bzw. für das Wischblatt 14 absolut gleich groß ist. Mit der Pendelbewegung der Schwinge 24 führt auch der Wischhebel 12 eine Pendelbewegung aus, die in Figur 1 mit einem Doppelpfeil 50 bezeichnet ist. Das Wischblatt 14 überstreicht nun mit einem Wischelement 15 auf der Scheibe 19 ein Wischfeld, das in Figur 1 mit 17 bezeichnet worden ist. Das Wischblatt 14 bzw. der Wischhebel 12 läuft im Betrieb aus seiner in Figur 1 dargestellten Betriebslage in seine erste Umkehrstellung 52, wo er seine Bewegungsrichtung umkehrt und in seine andere Umkehrstellung 54 zurückläuft. Damit die zu wischende Scheibe ordentlich gereinigt wird und ein ruhiger Lauf des Wischelements 15 auf der Scheibe 19 gewährleistet ist, kippt es stets in eine sogenannte Schlepplage.

In Figur 5 ist die Betriebs- oder Schlepplage dargestellt, in welcher sich das Wischelement 15 befindet, wenn es aus seiner Umkehrstellung 52 in die andere Umkehrstellung 54 läuft. Figur 6 dagegen zeigt die andere Schlepplage, die sich dann ergibt, wenn das Wischblatt 14 aus seiner Umkehrlage 54 in die andere Umkehrlage 52 läuft. Die jeweiligen Bewegungsrichtungen sind in den beiden Figuren 5 und 6 mit Pfeilen angegeben, die dem Doppelpfeil 50 in Figur 1 entsprechen und deshalb ebenfalls mit 50 bezeichnet worden sind.

Wie Figur 2 weiter zeigt, ist die Wischerwelle 20 mit einer Längsbohrung 60 versehen, in welcher ein Stößel 62 gelagert ist, der beidseitig aus der Wischerwelle 20 herausragt. Weiter ist an dem Nabenteil 18 ein Hebel 64 pendelbar gelagert. Der Hebel 64 ist als zweiarmiger Hebel ausgebildet. Seine Pendelachse 65 liegt quer zur Erstreckung der Pendelachse 66 der Wischerwelle 20. Die Pendelachse 66 ist bei der dargestellten Ausführungsform der Erfindung identisch mit der Längsachse des Stößels 62. Der erste Hebelarm 68 des Hebels 64 liegt auf der einen End-Stirnfläche des Stößels 62 auf. An dem anderen Hebelarm 70 des Hebels 64 ist das eine Ende einer Zugfeder 72 verankert, deren anderes Ende am Wischerarm 16 angreift. Die Zugfeder 72 ist in der Figur 2 dargestellten Position vorgespannt. Die Anordnung der Feder 72 und des Hebels 64 in bezug auf das Gelenk 13 zwischen Nabenteil und Wischerarm ist so getroffen, daß die Feder 72 den Wischerarm in Richtung des Pfeiles 74 belastet und somit das Wischblatt mit seinem Wischelement 15 an der zu wischenden Scheibe 19 angelegt hält. Wie Figur 1 zeigt, erstreckt sich die Achse des Gelenks 13 im wesentlichen in Wischrichtung (Doppelpfeil 50). Es liegt somit auch in einer Ebene, die als Wischebene bezeichnet werden kann. Die Lagerung der Wischerwelle 20 erfolgt in einem karosseriefesten Lagerbock 76.

Die bisher beschriebene Wischvorrichtung ist aus dem eingangs angegebenen Stand der Technik gemäß der deutschen Offenlegungsschrift 33 14 456 bekannt, auf den hier ausdrücklich Bezug genommen wird und dessen Offenbarung somit zur Offenbarung der vorliegenden Schutzrechtsanmeldung wird. Insbesondere die auf Seite 7, Absatz 2 und Seite 8, Absätze 1 und 2 gemachten Ausführungen sind hier von besonderer Bedeutung, weil dort in Verbindung mit den Figuren 2 und 3 die Zusammenhänge zwischen Stößelverstellung und Anlegekraft der Zugfeder ausführlich dargestellt und erläutert worden sind. Durch Längsverschieben des Stößels 62 kann die Vorspannung der Zugfeder 72 beeinflußt werden. In der in Figur 2 dargestellten Betriebsstellung ist die Zugfeder 72 nur gerinfügig vorgespannt. Der Auflagedruck des Wischelements 15 auf der Scheibe 19 ist also minimal. Wenn jedoch der Stößel 62 so verschoben wird, daß sein dem Hebelarm 68 zugekehrtes Ende weiter aus der Wischerwelle 20 heraustritt als dies in Figur 2 gezeichnet ist, schwenkt der Hebelarm 68 im Uhrzeigersinn um die Lagerstelle 65 des Hebels 64, wobei der andere Hebelarm 70 des Hebels 64 in eine Position gelangt, welche in Figur 2 strichpunktiert angedeutet und mit 67 bezeichnet worden ist. In dieser Betriebsstellung ist die Zugfeder 72 deutlich stärker gespannt als in der schon beschriebenen Betriebsstellung. Dadurch wird auch der Anpreßdruck (Pfeil 74), mit dem das Wischelement 15 auf der zu wischenden Scheibe 19 aufliegt, deutlich erhöht. Zur Längsverschiebung des Stößels 62 ist die Wischvorrichtung gemäß Figur 2 mit Steuermitteln versehen, die eine Nockenbahn 80 beinhalten. Die Nockenbahn 80 ist an der einen Stirnfläche eines scheibenförmigen, zur Pendelachse 66 im wesentlichen koaxial angeordneten Bauteils 82 angeordnet. Das scheibenförmige Bauteil 82 ist von einem U-förmigen Gestell 84 übergriffen, dessen beiden freien Enden der U-Schenkel 86 mit dem Lagerbock 76 fest verbunden sind. Die Nockenbahn 80 befindet sich auf der Stirnfläche des Bauteils 82, welcher der Wischerwelle 20 bzw. der Schwinge 24 zugekehrt ist. An der Seite der Schwinge 24, welche zur Nockenbahn 80 weist, sind zwei Rollen 88 gelagert, die in bezug auf die Pendelachse 66 auf demselben Teilkreis liegen. Die Nockenbahn 80 umgibt die Pendelachse 66 zumindest zum großen Teil. Sie ist, wie Figur 3 zeigt, ringförmig ausgebildet und so bemessen und angeordnet, daß die Rollen 88 sauber auf der Nockenbahn 80 laufen, wenn die Schwinge 24 während des Betriebs der Wischvorrichtung über einen Winkel pendelt, der in Figur 3 mit α bezeichnet ist. Damit die Nockenbahn 80 stets in Kontakt mit den Rollen 88 bleibt, ist eine vorgespannte Druckfeder 90 vorgesehen, die sich an den beiden einander zugewandten Flächen des Bauteils 82 und der U-Basis 92 abstützt. Weiter ist in der U-Basis 92 ein Führungszapfen 94 verankert, der sich in eine Bohrung 96 des Bauteils 82 erstreckt und eine Verdrehsicherung für dieses Bauteil 82 bildet. Die Schwinge 24 hat zwei zur Pendelachse 66 querliegende, einander gegenüberliegende Schwingarme 98, 99, an denen jeweils eine der beiden Rollen 88 angeordnet ist. Der Schwingarm 99 weist eine Verlängerung 100 auf (Figur 3), an welcher der Kugelbolzen 26 sitzt. Die beiden Rollen 88 bilden zusammen mit der Nockenbahn 80 Steuermittel, durch welche eine Verschiebung des Stößels 62 in Achsrichtung erreicht wird.

Diese wird anhand der schematischen Darstellung gemäß Figur 4 im folgenden erläutert. Es ist klar, daß dort die Pendelbewegung 50 als geradlinige Bewegung dargestellt sein muß, weil die Nockenbahn 80 ebenfalls geradlinig dargestellt ist. Dabei entspricht die Strecke zwischen den beiden Nocken 102 dem Pendelwinkel α . Die Nockenbahn 80 ist dort aufgetrennt und gestreckt gezeichnet. Auch die Anordnung der beiden Schwingarme 98 und 99 sowie der an diesen angeordneten Rollen 88 ist lediglich schematisch dargestellt. Wie Figur 4 weiter zeigt, stützt sich die Druckfeder 90 an der U-Basis 92 des Gestells 84 ab. Sie drückt dabei die Nockenbahn 80 in Richtung des Pfeiles 81 fest gegen die Rollen 88 und damit gegen die Schwinge 24, die ihrerseits fest mit der rohrartigen Wischerwelle 20 verbunden ist. Wie in Figur 4 weiter angedeutet ist, ist der Stößel 62 in der Bohrung 60 der Wischerwelle 20 verschiebbar geführt. Schließlich ist aus Figur, 4 ersichtlich, daß die Nockenbahn zwei Nocken 102 aufweist, die sich um ein Maß 104 aus der übrigen Bahn heraus erheben, wobei jeder Nocken einer der Rollen 88 zugeordnet ist. Gemäß Figur 4 befinden sich die beiden Rollen 88, die als Abgreifmittel für die Form der Nockenbahn 80 dienen, auf dem höchsten Bereich der Nocken 102. In dieser Stellung befindet sich das Wischelement 15 bzw. das Wischblatt 14 in seiner einen Umkehrlage. Wie aus Figur 2 ersichtlich ist, wird dabei der Stößel 62 durch den gerinfügig in Gegenuhrzeigersinn belasteten Hebelarm 68 gegen den mittleren Bereich des Bauteils 82 gedrückt. Dieser mittlere Bereich des Bauteils 82 dient als Druckstück 83, an das der von dem Hebel 64 abgewandte Ende des Stößels 62 stets zur Anlage kommt. Wenn die Wischvorrichtung nun eingeschaltet wird und das Wischblatt 14 aus seiner in Umkehrlage 54 in Richtung des Pfeiles 50 (Figur 6) bewegt wird, wird das Wischelement 15 zunächst noch mit einem minimalen Anpreßdruck auf der Scheibe 19 aufliegen, weil die Zugfeder 72 sich in der in Figur 2 gezeigten Position befindet, in der sie relativ entspannt ist. Die vorhandene Spannung reicht gerade aus, um ein Klappern des Wischhebels 12 gegenüber der Scheibe 19 zu verhindern und den Stößel 62 an dem Bauteil 82 anzulegen. Eine zum Wischelement gehörende Wischlippe 105 kippt nun bei Beginn der Pendelbewegung sofort und ohne Geräuschentwicklung in ihre vorschriftsmäßige, in Figur 6 dargestellte Schlepplage. Wenn das Wischblatt seine andere Umkehrstellung 52 (Figur 1) erreicht hat, befinden sich die beiden Rollen 88 wieder auf den Nocken 102, so daß das Wischelement 15 wieder maximal entlastet ist. Mit der Umkehr der Pendelrichtung kann sich dann die Wischlippe 105 wieder problemlos in ihre andere Schlepplage (Figur 5) umlegen. In dem zwischen den beiden Umkehrlagen 54 und 52 liegenden Bereich des Wischfeldes 17 gelangen die Rollen 88 jedoch in die vertieft liegenden Bereiche der Nockenbahn 80. Dabei wird die Nockenbahn 80 bzw. das gesamte Bauteil 82 um ein Maß 104 (Figuren 2 und 4) in Richtung der Pendelachse 66 zur Schwinge 24 hin verschoben, wobei die Rollen 88 stets mit der Nockenbahn 80 in Kontakt bleiben, weil die Druckfeder 90 für diesen Kontakt sorgt. Dabei wird natürlich auch der Stößel 62 über den Mittelbereich des Bauteils 82 um das Maß 104 verschoben, so daß der Stößel 62 mit seinem von der Nockenbahn 80 abgewandten Ende weiter aus der Wischerwelle 20 heraustritt und den Hebel 64 im Uhrzeigersinn um die Schwenkachse 65 dreht. Dabei gelangt die Zugfeder 72 in ihre mit 67 bezeichnete Position, wobei die Feder 72 gespannt und der Anpreßdruck 74 verstärkt wird. Somit ist klar, daß mit der Bewegung des Bauteils 82 bzw. der Nockenbahn 80 in Richtung der Pendelachse 66 um das Maß 104 stets dann die Spannung der Feder 72 verringert wird, wenn sich das Wischblatt 14 im Bereich der Umkehrlagen 52, 54 befindet, bzw. wenn sich das Wischblatt diesen Pendelumkehrstellungen annähert. In den beiden Pendelumkehrstellungen 52 und 54 selbst befinden sich beide Rollen 88 stets auf den höchsten Bereichen der beiden Nocken 102. Auf diese Weise wird die Auflagekraft im Bereich der beiden Pendelumkehrlagen 52, 54 stets reduziert gegenüber der Auflagekraft, die sich in dem zwischen den beiden Umkehrlagen ergebenden Wischfeldabschnitt einstellt. Weiter ergibt sich aus dem Vorstehenden, daß die Änderung der Auflagekraft des Wischblatts 14 auf der Scheibe 19 von der Pendelbewegung (Pfeil 50) des Scheibenwischers abgeleitet ist.

## Patentansprüche

1. Wischvorrichtung (10) für Scheiben (19) von Kraftfahrzeugen, mit einem pendelnd über die Scheibe bewegten, an dieser mit einer Auflagekraft angelegten Wischblatt (14), dessen Wischelement (15) bei jeder Richtungsänderung in eine Schlepplage kippt und die Auflagekraft im Bereich der beiden Pendelumkehrlagen (52, 54) geringer ist als in dem zwischen diesen Bereichen liegenden Wischfeldabschnitt, wobei die Wischvorrichtung (10) eine pendelnd angetriebene Wischerwelle (20) aufweist, an deren einem Ende der Wischhebel (12) befestigt ist, der mit einem Nabenteil (18) auf der Wischerwelle sitzt, an welchem ein das Wischblatt (14) tragender Wischerarm (16) angelenkt ist und die in der Pendelebene liegende Gelenkachse (13) zwischen Nabenteil (18) und Wischerarm (16) sich im wesentlichen in Pendelrichtung erstreckt, an dem Nabenteil (18) eine die Auflagekraft des Wischblatts (14) bewirkende, vorgespannte Zugfeder (72) angreift, deren anderes Ende an dem Wischerarm (16) verankert ist, wobei an dem Nabenteil (18) ein zweiarmiger Hebel (64) pendelbar gelagert ist, an dessen einem Hebelarm (70) das eine Ende der Zugfeder (72) gehalten ist und dessen anderer Hebelarm (63) mit einem längsverschiebbaren Stößel (62) derart zusammenarbeitet, daß der durch Steuermittel zum anderen Hebelarm (68) bewegte Stößel (62) den Hebel (64) schwenkt und dabei die Federspannung erhöht, dadurch gekennzeichnet, daß die Steuermittel durch eine in Richtung der Stößelachse verschiebbare, eine Verlängerung der Pendelachse (66) zumindest teilweise umgebende Nockenbahn (80) und durch mit dieser zusammenarbeitender Abgreifmittel (88) gebildet sind, die an einer mit der Wischerwelle (20) drehfest verbundenen, sich quer zur Pendelachse (66) erstreckenden Schwinge (24) angeordnet sind.

2. Wischvorrichtung nach Anspruch 1, dadurch gekennzeichnet, daß der Stößel (62) in einer Längsbohrung (60) der Wischerwelle (20) geführt ist.

3. Wischvorrichtung nach einem der Ansprüche 1 oder 2, dadurch gekennzeichnet, daß die Abgreifmittel durch Rollen (88) gebildet sind.

4. Wischvorrichtung nach einem der Ansprüche 1 bis 3, dadurch gekennzeichnet, daß die Nockenbahn (80) in Richtung der Pendelachse (66) verschiebbar ist und mit einem Druckstück (82) an dem von dem Hebel (64) abgewandten Ende des Stößels (62) anliegt.

5. Wischvorrichtung nach Anspruch 4, dadurch gekennzeichnet, daß die Nockenbahn (80) zum Stößel (62) federbelastet ist.

6. Wischvorrichtung nach einem der Ansprüche 4 oder 5, dadurch gekennzeichnet, daß die Nockenbahn (80) bezüglich der Pendelachse (66) verdrehgesichert ist.

7. Wischvorrichtung nach einem der Ansprüche 2 bis 6, dadurch gekennzeichnet, daß die Nockenbahn (80) sich an der einen Stirnfläche eines scheibenförmigen, zur Pendelachse (66) im wesentlichen koaxial angeordneten Bauteils (82) befindet, daß das scheibenförmige Bauteil (82) von einem U-förmigen, gestellfest angeordneten Gestell (84) übergriffen ist, dessen U-Basis (92) sich mit Abstand (104) von der dem Stößel (62) abgewandten Seite des Bauteils (82) befindet und daß sich an den beiden einander zugewandten Seiten der U-Basis (92) und des Bauteils (82) eine vorgespannte Druckfeder (90) abstützt.

8. Wischvorrichtung nach Anspruch 7, dadurch gekennzeichnet, daß in einer Bohrung der U-Basis (92) ein sich parallel zur Pendelachse (66) erstreckender Führungsbolzen (94) angeordnet ist, der in einer Ausnehmung (96) des Bauteils (82) greift.

9. Wischvorrichtung nach einem der Ansprüche 1 bis 8, dadurch gekennzeichnet, daß die Schwinge (24) an der dem Bauteil (82) zugewandten Ende der Wischerwelle (20) befestigt ist und daß an der der Nockenbahn (80) zugewandten Seite der Schwinge (24) die als Rollen (88) ausgebildeten Abgreifmittel angeordnet sind.

10. Wischvorrichtung nach Anspruch 9, dadurch gekennzeichnet, daß die Schwinge (24) zwei zur Pendelachse (66) querliegende und einander gegenüberliegende Schwingarme (98, 99) aufweist, daß jeder Schwingarm eine Rolle (88) trägt und daß jeder Rolle ein Nocken (102) der Nockenbahn (80) zugeordnet ist.

11. Wischvorrichtung nach Anspruch 10, dadurch gekennzeichnet, daß der eine Schwingarm (99) mit einer sich von der Pendelachse (66) wegerstreckenden Verlängerung (100) versehen ist, welche einen Kugelbolzen (26) zum Anschluß eines Pendelgetriebes (28) aufweist.

12. Wischvorrichtung nach einem der Ansprüche 10 oder 11, dadurch gekennzeichnet, daß die Rollen (88) auf die Nocken (102) laufen, wenn sich das Wischblatt (14) einer seiner beiden Pendelumkehrstellungen (52, 54) annähert.

13. Wischvorrichtung nach Anspruch 12, dadurch gekennzeichnet, daß sich die Rollen (88) auf den höchsten Bereichen der Nocken (102) befinden, wenn das Wischblatt (14) in einer der beiden Pendelumkehrstellungen (52, 54) ist.

## Claims

1. Wiping device (10) for windows (19) of motor vehicles, with a wiping blade (14) which is moved in an oscillating manner over the window, is applied to the latter with a contact force and the wiping element (15) of which tips into a drag position on each change of direction and the contact force is smaller in the region of the two oscillation reversal positions (52, 54) than in the wiping field section lying between these regions, the wiping device (10) having a wiper shaft (20) which is driven in an oscillating manner and on one end of which the wiping lever (12) is fastened, which is located on the wiper shaft with a hub part (18), on which a wiper arm (16) which bears the wiping blade (14) is articulated, and the joint axis (13), which lies in the oscillation plane, extends between hub part (18) and wiper arm (16) essentially in the oscillation direction, on the hub part (18) a pretensioned tension spring (72) engages, which brings about the contact force of the wiping blade (14), the other end of which is anchored on the wiper arm (16), a two-armed lever (64) being mounted oscillatably on the hub part (18), on one lever arm (70) of which one end of the tension spring (72) is held and the other lever arm (68) of which interacts with a longitudinally displaceable tappet (62) in such a manner that the tappet (62), which is moved by control means in relation to the other lever arm (68), pivots the lever (64) and at the same time increases the spring tension, characterised in that the control means are formed by a cam track (80) which is displaceable in the direction of the tappet axis and at least partially surrounds an extension of the oscillation axis (66) and by pick-off means (88) which interact with this track and are arranged on a rocker (24) which is connected in a rotationally fixed manner to the wiper shaft (20) and extends transversely to the oscillation axis (66).

2. Wiping device according to Claim 1, characterised in that the tappet (62) is guided in a longitudinal bore (60) of the wiper shaft (20).

3. Wiping device according to one of Claims 1 or 2, characterised in that the pick-off means are formed by rollers (88).

4. Wiping device according to one of Claims 1 to 3, characterised in that the cam track (80) is displaceable in the direction of the oscillation axis (66) and bears with a pressure piece (82) on the end of the tappet (62) facing away from the lever (64).

5. Wiping device according to Claim 4, characterised in that the cam track (80) is spring-loaded in relation to the tappet (62).

6. Wiping device according to one of Claims 4 or 5, characterised in that the cam track (80) is torsionally secured in relation to the oscillation axis (66).

7. Wiping device according to one of Claims 2 to 6, characterised in that the cam track (80) is situated on one front face of a disc-shaped component (82) arranged essentially coaxially with the oscillation axis (66), in that the disc-shaped component (82) is overlapped by a U-shaped frame (84) which is arranged fixed to the frame and the U-base (92) of which is situated at a distance (104) from the side of the component (82) facing away from the tappet (62) and in that a pretensioned pressure spring (90) is supported on the two mutually facing sides of the U-base (92) and of the component (82).

8. Wiping device according to Claim 7, characterised in that, in a bore of the U-base (92), a guide pin (94) is arranged, which extends parallel to the oscillation axis (66) and engages in a recess (96) of the component (82).

9. Wiping device according to one of Claims 1 to 8, characterised in that the rocker (24) is fastened on the end of the wiper shaft (20) facing the component (82) and in that the pick-off means designed as rollers (88) are arranged on the side of the rocker (24) facing the cam track (80).

10. Wiping device according to Claim 9, characterised in that the rocker (24) has two mutually opposite rocker arms (98, 99) which lie transversely to the oscillation axis (66), in that each rocker arm bears a roller (88) and in that each roller is assigned a cam (102) of the cam track (80).

11. Wiping device according to Claim 10, characterised in that one rocker arm (99) is provided with an extension (100) which extends away from the oscillation axis (66) and has a ball pin (26) for connection of an oscillation linkage (28).

12. Wiping device according to one of Claims 10 or 11, characterised in that the rollers (88) run onto the cams (102) when the wiping blade (14) approaches one of its two oscillation reversal positions (52, 54).

13. Wiping device according to Claim 12, characterised in that the rollers (88) are situated on the highest regions of the cams (102) when the wiping blade (14) is in one of the two oscillation reversal positions (52, 54).

## Revendications

1. Dispositif d'essuyage (10) peur des vitres (19) de véhicules automobiles, comportant un balai d'essuie-glace (14) à mouvement pendulaire reposant avec une force d'appui sur la vitre dont l'élément d'essuyage (15) bascule en position de traîne à chaque changement de direction et dont la force d'appui dans la zone des deux positions d'inversion pendulaire (52, 54) est plus faible que pour le champ d'essuyage situé entre ces zones, dispositif d'essuyage (10) comportant un axe d'essuyage (20) à entraînement pendiculaire avec un levier d'essuie-glace fixé à une extrémité qui repose avec une pièce de moyeu (18) sur l'axe d'essuyage et sur lequel est articulé le bras (16) portant le balai d'essuie-glace (14) et l'axe d'entraînement (13) se trouvant dans le plan du mouvement pendulaire entre la pièce de moyeu (18), le bras de levier (16) s'étendant essentiellement dans la direction d'oscillation, un ressort de traction précontraint (72) étant en prise dans la pièce de moyeu (18) pour créer la force d'appui du balai d'essuie-glace (14), son autre extrémité étant accrochée au bras d'essuie-glace (16), un levier à deux bras (64) étant monté pivotant sur la pièce de moyeu (18), une extrémité du ressort (72) étant accrochée à l'un des bras (70) du levier et l'autre bras (68) du levier coopère avec un poussoir (62) coulissant longitudinalement, de manière à ce que le poussoir (62) déplacé par le moyen de commande vers l'autre bras de levier (68), bascule le levier (64) et augmente ainsi la tension du ressort, caractérisé en ce que les moyens de commande sont réalisés par un chemin de cames (80) coulissant en direction de l'axe du poussoir, entourant au moins partiellement un prolongement de l'axe pendulaire (66) et par un organe détecteur de chemin de came (88) coopérant avec celui-ci, ces moyens de commande étant portés par une manivelle oscillante (24) transversale à l'axe pendulaire (66) solidaire en rotation avec l'axe de l'essuie-glace (20).

2. Dispositif d'essuyage selon la revendication 1, caractérisé en ce que le poussoir (62) est guidé dans un perçage longitudinal de l'axe d'essuie-glace (20).

3. Dispositif d'essuyage selon l'une des revendications 1 ou 2, caractérisé en ce que les moyens de détection de chemin de came sont des galets (88)

4. Dispositif d'essuyage selon l'une des revendications 1 à 3, caractérisé en ce que le chemin de cames (80) est coulissant dans la direction de l'axe pendulaire (66) et s'appuie avec un organe de pression (82) sur l'extrémité du poussoir (62) autre que celle tournée vers le levier (64).

5. Dispositif d'essuyage selon la revendication 4, caractérisé en ce que le chemin de cames (80) est chargé par un ressort en direction du poussoir (62).

6. Dispositif d'essuyage selon l'une des revendications 4 ou 5, caractérisé en ce que le chemin de cames (80) est assuré en rotation vis-à-vis de l'axe pendulaire (66).

7. Dispositif d'essuyage selon les revendications 2 à 6, caractérisé en ce que le chemin de came (80) se trouve sur la face frontale d'une pièce (82) en forme de disque essentiellement coaxiale à l'axe pendulaire (66) et en ce que la pièce (82) en forme de disque est enserrée par une armature (84) fixe, en forme de U, dont la base (92) se trouve à la distance (104) de la face de la pièce (82) opposée au poussoir (62) et qu'un ressort de pression (90) précontraint s'appuie sur les deux faces en regard l'une de l'autre de la base (92) en U et la pièce (82).

8. Dispositif d'essuyage selon la revendication 7, caractérisé en ce qu'un goujon de guidage (94) s'étendant parallèle à l'axe d'oscillation (66) se trouve dans un perçage de la base (92) en U, ce goujon étant en prise dans un évidement (96) de la pièce (82).

9. Dispositif d'essuyage selon les revendications 1 à 8, caractérisé en ce que la manivelle oscillante (24) est fixée à l'extrémité de l'axe d'essuyage (20) tourné vers la pièce (82) et les moyens de détection réalisés sous la forme de galets (88) sont fixés sur le côté de la manivelle oscillante (24) tournée vers le chemin de cames (80).

10. Dispositif d'essuyage selon la revendication 9, caractérisé en ce que la manivelle oscillante (24) présente deux bras (98, 99) opposés l'un à l'autre et transversaux à l'axe (66) chaque bras portant un galet (88) et chaque galet étant associé à une came (102) du chemin de cames (80).

11. Dispositif d'essuyage selon la revendication (10), caractérisé en ce qu'un bras d'oscillation (99) est prévu avec un prolongement (100) s'étendant à partir de l'axe pendulaire (66), ce prolongement présentant une rotule (26) pour la fixation d'une articulation pendulaire (28).

12. Dispositif d'essuyage selon l'une des revendications 10 ou 11, caractérisé en ce que les galets (88) passent sur les cames (102) lorsque le balai d'essuyage (14) approche de l'une de ses deux positions d'inversion d'oscillation (52, 54).

13. Dispositif d'essuyage selon la revendication 12, caractérisé en ce que les galets (88) se trouvent sur la zone la plus élevée des cames lorsque le balai d'essuyage (14) se trouve dans l'une des positions d'inversion d'oscillation (52, 54).
